# EUROPEAN PATENT SPECIFICATION

(11) **EP 0 651 772 B1**
(45) Date of publication and mention of the grant of the patent: **14.10.1998**
(21) Application number: 93916762.3
(22) Date of filing: 24.06.1993
(51) Int. Cl.: C08G 64/08, G02B 1/10, G02B 5/08, B32B 27/36

(54) **THIODIPHENOL COPOLYCARBONATES AND THEIR USE AS COMPONENTS OF MULTILAYERED POLYMERIC REFLECTIVE BODIES**
THIODIPHENOL-COPOLYCARBONATE UND IHRE VERWENDUNG ALS KOMPONENTE VON MEHRSCHICHTIGEN, REFLEKTIERENDEN KUNSTSTOFFELEMENTEN
COPOLYCARBONATES DE THIODIPHENOL ET LEUR UTILISATION COMME COMPOSANTS DE CORPS REFLECHISSANTS POLYMERES A COUCHES MULTIPLES

(30) Priority: 16.07.1992 US 914074
(43) Date of publication of application: 10.05.1995
(73) Proprietor: THE DOW CHEMICAL COMPANY, Midland, Michigan 48674 (US)
(72) Inventor: BALES, Stephen, E., Midland, MI 48642 (US); LANGHOFF, Charles, A., Midland, MI 48640 (US); WHEATLEY, John, A., Midland, MI 48640 (US)
(74) Representative: Casalonga, Axel
(86) International application number: US9306074
(87) International publication number: WO9402533

(56) References cited:
- EP-A- 0 404 463
- DE-B- 1 187 797
- FR-A- 2 321 512
- FR-A- 2 377 267
- US-A- 4 426 514
- JAPANESE JOURNAL OF APPLIED PHYSICS vol. 28, no. 5, 25 May 1989, TOKYO JP pages 801 - 803 SHIGENORI SHIROUZU ET AL 'Refractive Index Anisotropies of Constructive Units in Polycarbonates'

## Description

This invention relates generally to copolycarbonates; their method of preparation; their use in preparing improved polymeric bodies; and the improved polymeric bodies. More specifically, the invention concerns novel 4,4'-thiodiphenol (TDP) copolycarbonates having properties that make them particularly suitable for preparing certain types of multilayered polymeric bodies.

U.S. Patents 5,122,905 and 5,122,906 teach the use of polycarbonates in preparing highly reflective multilayered polymeric bodies. The only polycarbonate it specifically discloses in its Examples is a homopolycarbonate of bisphenol A (Calibre 300-22, trademark of The Dow Chemical Company). We concluded that it would be desirable to provide materials with improvements in glass transition temperature (Tg), refractive index (RI), and limiting oxygen index (LOI). Such materials would significantly expand the application areas for the multilayered polymeric bodies.

In addition, several recent published patent applications teach the use of (previously known) copolycarbonates of 4,4'-thiodiphenol (TDP) and bisphenol A (BA) as the high refractive index (RI) component of a multilayered polymeric reflective body.

Copolycarbonates of 4,4'-thiodiphenol and a second dihydroxy compound are known from US-A-4 426 514 and FR-A-2 377 267.

### SUMMARY OF THE INVENTION

This invention provides novel copolycarbonates that typically exhibit the desired improvements in Tg, RI, and LOI compared to the prior art TDP/BA copolycarbonates (and BA homopolycarbonates). More particularly, this invention provides novel copolycarbonates of TDP and 9,9-bis (4-hydroxyphenyl) fluorene (BHPF).

A first broad aspect of the invention is a copolycarbonate of 4,4'-thiodiphenol and 9,9-bis (4-hydroxy-phenyl) fluorene.

A second broad aspect of the invention is a multilayered polymeric reflective body wherein the highest refractive index component is a copolycarbonate of 4,4'-thiodiphenol and 9,9-bis (4-hydroxyphenyl) fluorene.

A third broad aspect of the invention is a process for making copolycarbonates comprising reacting 4,4'-thiodiphenol and 9,9-bis (4-hydroxyphenyl) fluorene with a carbonate precursor under conditions sufficient to cause reaction.

### DETAILED DESCRIPTION OF THE INVENTION

In the practice of this invention advantageously the copolycarbonate of TDP and BHPF comprises from 10 to 80 mole percent of the dihydroxy units derived from TDP. Methods of producing polycarbonates are well known in the prior art. Such methods are also suitable for use in forming the copolycarbonate compositions of the present invention. Suitable methods for preparing polycarbonates are set forth in U.S. Patents 3,248,414; 3,153,008; 3,215,668; 3,187,065; 3,028,365; 2,999,846; 2,999,835; 2,964,974; 2,970,137; and 1,991,273. The copolycarbonates of the present invention are prepared by the reaction of the bisphenol mixture with a carbonate polymer precursor, which may include either a carbonyl halide, a diaryl carbonate, a dialkyl carbonate, or a bishaloformate.

This invention is further illustrated by the following examples.

### EXAMPLE 1 (INCLUDING TYPICAL PREPARATION)

This example describes the synthesis of a 50/50 molar ratio copolycarbonate of TDP and BHPF. A 5L 4-neck roundbottom flask equipped with a thermometer, condenser, phosgene/nitrogen inlet, and a paddle stirrer connected to a Cole Parmer servodyne was charged with TDP (105.52 g, 0.484 mol), BHPF (169.40 g, 0.484 mol), 4-tertbutylphenol (2.18 g, 14.5 mmol, 1.5 mol % based on bisphenols), pyridine (199.0 g, 2.516 mol), and methylene chloride (2.36 L). The mixture was stirred at 250 rpm and slowly purged with nitrogen as phosgene (95.8 g, 0.968 mol) was bubbled in over 50 minutes while maintaining the reactor temperature at 20 to 24°C. An additional 4.0 g of phosgene was then added over a period of 7 minutes.

The reaction mixture was worked up by adding methanol (5mL) and then 3N HCl (3.6L). After stirring for 15 minutes, the mixture was allowed to stand overnight. The methylene chloride layer was separated and washed further with 0.5N HCl (0.42L), water (0.4 L), and was then passed through a column of MSC-1-H ion exchange resin (0.5 L bed volume). The copolymer was isolated by adding 0.9 L of this purified methylene chloride solution to a mixture of 1.2 L hexane and 2.4 L acetone in an explosion resistant Waring blender. The product was filtered, dried in a hood overnight, and then dried for 48 hours in a vacuum oven at approximately 120°C. The resulting copolycarbonate weighed 267.7 g, had an inherent viscosity (IV) of 0.52 dL/g (determined in methylene chloride at 0.5 g/dL and 25°C), and exhibited an extrapolated onset Tg of 215°C (determined by DSC at a scan rate of 20°C/minute). ¹H NMR analysis was in agreement with the 50/50 TDP/BHPF monomer feed ratio. A compression molded plaque, prepared at 320°C, has a RI of 1.650 when measured at 600 nm.

### EXAMPLES 2-7

Additional copolycarbonates of the type TDP/X were prepared over a range of molar ratios and essentially according to the general procedure of Example 1 except the bisphenol X was selected from BHPF (Example 2), BAP (Example 3), BHDM (Example 4), TBBA (Example 5), TCBA (Example 6), and PP (Example 7). These compositions and the results for IV, Tg, RI and LOI are summarized in Table 1. LOI measurements were performed on compression molded specimens (0.125 inch thickness, molded at approximately 100°C above Tg) according to ASTM Test Method D-2863, For further comparison, results are also shown for prior art TDP/BA copolycarbonate. As evidenced by the results of Table 1, the new TDP copolycarbonates of this invention (Example 2) provide significant improvements in Tg, RI, and LOI compared to corresponding TDP/BA copolycarbonates (Comparative Example).

LOI are summarized in Table 1. LOI measurements were performed on compression molded specimens (0.125 inch thickness, molded at approximately 100°C above Tg) according to ASTM Test Method D-2863. For comparison, results are also shown for prior art TDP/BA copolycarbonates. As evidenced by the results of Table 1, the new TDP copolycarbonates of this invention (Examples 2-7) provide significant improvements in Tg, RI, and LOI compared to corresponding TDP/BA copolycarbonates (Comparative Example).

**TABLE 1**

| Ex. No. | Diol X | Mole % X | IV (dL/g) | Tg(°C) | RI (at 600 nm) | LOI (%O₂) |
|---|---|---|---|---|---|---|
| Comp. | BA* | 25 | 0.51 | 125 | 1.636 | 46.9 |
| | | 50 | 0.54 | 135 | 1.614 | 37.2 |
| | | 75 | 0.56 | 140 | 1.601 | 29.0 |
| | | | | | | |
| 2 | BHPF | 25 | 0.49 | 165 | 1.651 | 58.0 |
| | | 50 | 0.37 | 207 | 1.652 | NM |
| | | 50 | 0.60 | 216 | 1.649 | 59.7 |
| | | 75 | 0.57 | 253 | NM** | NM |
| | | | | | | |
| 3 | BAP* | 25 | 0.51 | 139 | 1.642 | 49.5 |
| | | 35 | 0.48 | 146 | 1.635 | NM |
| | | 50 | 0.46 | 154 | 1.627 | 42.5 |
| | | 75 | 0.50 | 175 | 1.618 | 39.5 |
| | | | | | | |
| 4 | BHDM* | 25 | 0.47 | 148 | 1.647 | NM |
| | | | | | | |
| 5 | TBBA* | 15 | 0.48 | 143 | NM | NM |
| | | 20 | 0.41 | 149 | NM | NM |
| | | 25 | 0.39 | 154 | 1.642 | NM |
| | | 50 | 0.40 | 196 | 1.634 | NM |
| | | 75 | 0.54 | 234 | NM | NM |
| | | | | | | |
| 6 | TCBA* | 25 | 0.42 | 147 | NM | NM |
| | | 50 | 0.43 | 179 | NM | NM |
| | | 75 | 0.34 | 200 | NM | NM |
| | | | | | | |
| 7 | PP* | 25 | 0.46 | 152 | NM | NM |
| | | 50 | 0.52 | 197 | NM | NM |
| | | 75 | 0.44 | 223 | NM | NM |

| | | | | | | |
|---|---|---|---|---|---|---|
| *Not an example of this invention. | | | | | | |
| **NH = not measured. | | | | | | |

As can be seen these polymers possess very desirable combinations of physical and optical properties, particularly the high refractive index and good heat resistance and processing temperatures. These and other properties make the polymers according to the present invention well suited to be employed as layers of varying thickness in multi-layered structures, optionally also comprising other features, to achieve selected transmission, reflective and other optical effects.

Examples of these applications for the compositions according to this invention include use as a high refractive index layer in the reflective polymeric bodies as shown in U.S. Patents 5,122,905; 5,122,906; 5,217,794 and 5,126,880. Among the benefits obtained using these materials in these and other types of structures are the ability to provide greater differences in refractive index versus another given polymer and the corresponding benefits of obtaining increased reflectance for a given number of layers or obtaining equivalent reflectance with less layers.

It is also possible to employ the polymers according to this invention as a high refractive index layer of an appropriate thickness to suppress higher order reflectance as is shown in the visibly transparent infrared (IR) reflective films in U.S. Patent 5,103,337. These materials are similarly suitable for use as high refractive index layers in other spectrally selective reflectors. These polymers can also suitably be employed as a high refractive index layer in the tamper evident films as shown in U.S. Patent 5,149,578; in the covert signature films as shown in U.S. Patent 5,095,210; and in the birefringent interference polarizer films as shown in EP 488,544.

## Claims

1. A copolycarbonate of 4,4-thiodiphenol and 9,9-bis (4-hydroxyphenyl) fluorene.

2. A copolycarbonate of claim 1 wherein from 10 to 80 mole percent of the dihydroxy units are derived from 4,4'-thiodiphenol.

3. The copolycarbonate of claim 1 comprising a reaction product of (a) a carbonate polymer precursor selected from a carbonyl halide, a diaryl carbonate, a dialkyl carbonate and a bishaloformate ; (b) 4,4'-thiodiphenol ; and (c) 9,9-bis (4-hydroxyphenyl)fluorene.

4. A multilayered polymeric reflective body wherein the highest refractive index component is a copolycarbonate of 4,4'-thiodiphenol and 9,9-bis (4-hydroxyphenyl) fluorene.

5. A multilayered polymeric reflective body wherein the highest refractive index component is a copolycarbonate comprising the reaction product of (a) a carbonate polymer precursor selected from a carbonyl halide, a diaryl carbonate, a dialkyl carbonate and a bishaloformate ; (b) 4,4'-thiodiphenol ; and (c) 9,9-bis (4-hydroxyphenyl) fluorene.

6. A process for making copolycarbonates comprising reacting 4,4'-thiodiphenol and 9,9-bis (4-hydroxyphenyl) fluorene with a carbonate precursor under conditions sufficient to cause reaction.

7. Process of claim 6 wherein 4,4'-thiodiphenol is reacted with 9,9-bis (4-hydroxyphenyl) fluorene in the presence of phosgene.

## Patentansprüche

1. Copolycarbonat von 4,4'-Thiodiphenol und 9,9-Bis(4-hydroxyphenyl)-fluoren.

2. Copolycarbonat nach Anspruch 1, in welchem von 10 bis 80 Mol-% der Dihydroxyeinheiten von 4,4'-Thiodiphenol abstammen.

3. Copolycarbonat nach Anspruch 1, umfassend ein Reaktionsprodukt von (a) einem Carbonatpolymervorläufer, ausgewählt aus einem Carbonylhalogenid, einem Diarylcarbonat, einem Dialkylcarbonat und einem Bishalogenformiat, (b) 4,4'-Thiodiphenol und (c) 9,9-Bis-(4-hydroxyphenyl)-fluoren.

4. Mehrschichtiger polymerer reflektierender Körper, in welchem die Komponente mit dem höchstem Brechungsindex ein Copolycarbonat von 4,4'-Thiodiphenol und 9,9-Bis-(4-hydroxyphenyl)-fluoren ist.

5. Mehrschichtiger polymerer reflektierender Körper, in welchem die Komponente mit dem höchstem Brechungsindex ein Copolycarbonat ist, welches das Reaktionsprodukt von (a) einem Carbonatpolymervorläufer, ausgewählt aus einem Carbonylhalogenid, einem Diarylcarbonat, einem Dialkylcarbonat und einem Bishalogenformiat, (b) 4,4'-Thiodiphenol und (c) 9,9-Bis-(4-hydroxyphenyl) -fluoren umfaßt.

6. Verfahren zur Herstelluntg von Copolycarbonaten, umfassend die Umsetzung von 4,4-Thiodiphenol und 9,9-Bis(4-hydroxyphenyl)-fluoren mit einem Carbonatvorläufer unter zur Herbeiführung der Reaktion ausreichenden Bedingungen.

7. Verfahren nach Anspruch 6, worin 4,4'-Thiodiphenol mit 9,9-Bis-(4-hydroxyphenyl)-fluoren in Anwesenheit von Phosgen umgesetzt wird.

## Revendications

1. Copolycarbonate de 4,4'-thiodiphénol et de 9,9-bis(4-hydroxyphényl)fluorène.

2. Copolycarbonate conforme à la revendication 1, dans lequel de 10 à 80 % en moles des motifs dihydroxy dérivent du 4,4'-thiodiphénol.

3. Copolycarbonate conforme à la revendication 1, qui est un produit de réaction de :
a) un précurseur de polycarbonate, choisi parmi un halogénure de carbonyle, un carbonate de diaryle, un carbonate de dialkyle et un bis(halogénoformiate),
b) du 4,4'-thiodiphénol, et
c) du 9,9-bis(4-hydroxyphényl)fluorène.

4. Corps réflecteur multicouche en polymère, dans lequel le composant dont l'indice de réfraction est le plus élevé est un copolycarbonate de 4,4'-thiodiphénol et de 9,9-bis(4-hydroxyphényl)fluorène.

5. Corps réflecteur multicouche en polymère, dans lequel le composant dont l'indice de réfraction est le plus élevé est un copolycarbonate qui est un produit de réaction de :
a) un précurseur de polycarbonate, choisi parmi un halogénure de carbonyle, un carbonate de diaryle, un carbonate de dialkyle et un bis(halogénoformiate),
b) du 4,4'-thiodiphénol, et
c) du 9,9-bis(4-hydroxyphényl)fluorène.

6. Procédé de préparation de copolycarbonates, qui comporte le fait de faire réagir du 4,4'-thiodiphénol et du 9,9-bis(4-hydroxyphényl)fluorène avec un précurseur de carbonate, dans des conditions suffisantes pour provoquer la réaction.

7. Procédé conforme à la revendication 6, dans lequel on fait réagir du 4,4'-thiodiphénol avec du 9,9-bis(4-hydroxyphényl)fluorène. en présence de phosgène.
